# EUROPÄISCHE PATENTSCHRIFT

(11) **EP 1 466 515 B1**
(45) Veröffentlichungstag und Bekanntmachung des Hinweises auf die Patenterteilung: **18.01.2006**
(21) Anmeldenummer: 04007819.8
(22) Anmeldetag: 31.03.2004
(51) Int. Cl.: A01B 1/02, A01B 1/22

(54) **Schaufel**
Shovel
Pelle

(30) Priorität: 07.04.2003 DE 20305575 U
(43) Veröffentlichungstag der Anmeldung: 13.10.2004
(73) Patentinhaber: Idealspaten Bredt GmbH & Co. KG, 58313 Herdecke (DE)
(72) Erfinder: Rudolph, Hans-Ulrich, Goethestrasse 27 58313 Herdecke (DE)
(74) Vertreter: GROSSE BOCKHORNI SCHUMACHER

(56) Entgegenhaltungen:
- BE-A- 345 374
- BE-A- 415 129
- GB-A- 115 803
- US-A- 4 718 708

## Beschreibung

Die Erfindung betrifft eine Schaufel mit einem Schaufelblatt und einem Schaufelstiel, der an dem Schaufelblatt über ein Halteglied befestigt ist gemäß dem Oberbegriff des Schutzanspruches 1.

Insbesondere aus den skandinavischen Ländern sind als Werkzeug spezielle Schaufeln, sogenannte Grabeschaufeln bekannt, die mit unterschiedlich großen Schaufelblättern ausgebildet sind. Das jeweilige Schaufelblatt besitzt dabei ein löffelartiges Halteglied, das mit seinem Löffelteil im letzten Drittel des Schaufelblattes mittig mit diesem vernietet ist und an dessen abgewinkelten Löffelschaft ein Grabeschaufelstiel mit langlochartigem Querschnitt befestigt ist, und zwar teils durch Schrauben und teils durch Nieten.

Die Schraubverbindung in der Form von mehreren übereinander angeordneten Holzschrauben ist dabei zwischen dem Endteil des Löffelschafts des Haltegliedes und dem Grabeschaufelstiel vorgesehen, wogegen die Nietverbindung im Anschluss daran am Grabeschaufelstielende vorgesehen ist, und zwar um damit eine verdrehfeste Befestigung zu erhalten. Um eine derartige Nietverbindung zu erhalten, muss jedoch das Grabeschaufelstielende, z.B. bei 2 Nieten, zwei Mal in Richtung der Längsachse des langlochartigen Querschnitts des Grabeschaufelstiels durchbohrt werden, um dann das Halteglied über den Grabreschaufelstiel mit dem rückwärtigen aufgewölbten Rand des Schaufelblattes vernieten zu können.

Derartig aufgebaute bekannte Grabeschaufeln sind jedoch relativ aufwendig zu montieren und erfordern relativ hohe Anforderungen an die Passgenauigkeit aller Komponenten, da ansonsten der Stand des Schaufelstieles bezogen auf die Mittigkeit und Verdrehung nicht gewährleistet ist.

Ferner wird als besonderer Nachteil einer derartigen Grabeschaufelkonstruktion der Umstand gesehen, dass sich die Nietköpfe auf der Unterseite des Schaufelblattes beim Gebrauch abnützen können und dadurch letztendlich die Grabeschaufel zu Bruch gehen kann.

Schließlich wird das Schaufelstielende durch die notwendigen Bohrlöcher, durch die die Niete durchgesteckt werden, in seinem Querschnitt und damit in seiner möglichen Belastung geschwächt, was wiederum die Festigkeit und Steifigkeit der Grabeschaufel als Ganzes verschlechtert.

Hier setzt die Erfindung ein, der die Aufgabe zu Grunde liegt, eine Grabeschaufel vorzuschlagen, die in ihrer Konstruktion die aufgezeigten

Nachteile nicht aufweist, d. h. deren Montage einfacher ist und bei der gleichzeitig eine ausreichende Steifigkeit sowie eine erhöhte Gebrauchsdauer gewährleistet ist.

Diese Aufgabe wird erfindungsgemäß in einfacher Weise durch die im kennzeichnenden Teil des Schutzanspruchs 1 enthaltenen Merkmale gelöst, wobei zweckmäßige Weiterbildungen durch die jeweiligen Unteransprüche gekennzeichnet sind.

Durch das erfindungsgemäße Merkmal des kennzeichnenden Teils des Schutzanspruchs 1, und zwar das Halteglied so zu wählen, dass dieses mindestens zwei voneinander getrennten Bereichen mit dem Schaufelblatt unlösbar verbunden ist, wird vor allem neben einer gegenüber dem Stand der Technik einfacheren Montage der Grabeschaufel eine höhere Festigkeit und Steifigkeit der Grabeschaufel erreicht. Letzteres wird wie beansprucht dadurch erreicht, wenn das Halteglied in einem Bereich beidseitig den Schaufelstiel der Grabeschaufel umgreifende Laschen aufweist, die mit dem Schaufelblatt unlösbar verbunden sind. Diese unlösbare Verbindung wird dabei am besten dadurch erreicht, indem man die Laschen mit ihren freien Enden an den rückwärtigen aufgewölbten Rand des Schaufelblattes anschweißt.

Insbesondere bei einer Grabeschaufel mit einem löffelartigen Halteglied, an dessen Löffelschaft der Schaufelstiel der Grabeschaufel befestigbar ist, wobei der Schaufelstiel vorzugsweise einen langlochartigen Querschnitt aufweist und der flache Löffelteil des Haltegliedes mittig mit dem flachen Endabschnitt des Schaufelblattes verbunden ist, ist es vorteilhaft möglich, dass die Laschen des Halteglieds derart angeordnet sind, dass sie den Schaftstiel der Grabeschaufel an dessen Flachseiten umgreifen. Dadurch ist insbesondere auch eine Verdrehsicherheit des Schaufelstiels gewährleistet.

Zur Gestaltung einer einfachen Montage und zur Erreichung einer hohen Festigkeit bzw. Steifigkeit der Grabeschaufel hat es sich als besonders zweckmäßig erwiesen, dass einerseits der als eine Art flacher Löffel ausgebildete Abschnitt des Haltegliedes mittig mit dem flachen Endabschnitt des Schaufelblattes verschweißt wird und andererseits die den Schaufelstiel der Grabeschaufel umgreifenden Laschen mit ihren freien Enden am rückwärtigen aufgewölbten Rand des Schaufelblattes ebenfalls durch eine Schweißung dort befestigt sind.

Für eine rationelle Fertigung der erfindungsgemäßen Grabeschaufel ist es zweckmäßig, das Halteglied als flaches Stanzteil auszubilden, das dann durch einen Pressvorgang derart verformt wird, dass die Laschen einen den Schaufelstiel der Grabeschaufel aufnehmenden U-förmigen Bügel erhält. Bei diesem Pressvorgang wird gleichzeitig das Halteglied derart abgewinkelt, dass der Löffelschaft des Haltegliedes im Verhältnis zum flachen Löffelteil eine stumpfen Winkel einschließt, der der Stellung des Schaufelstiels zum Grabeschaufelblatt bei der Benutzung der Grabeschaufel hinsichtlich der physiologischen Anforderungen gerecht wird.

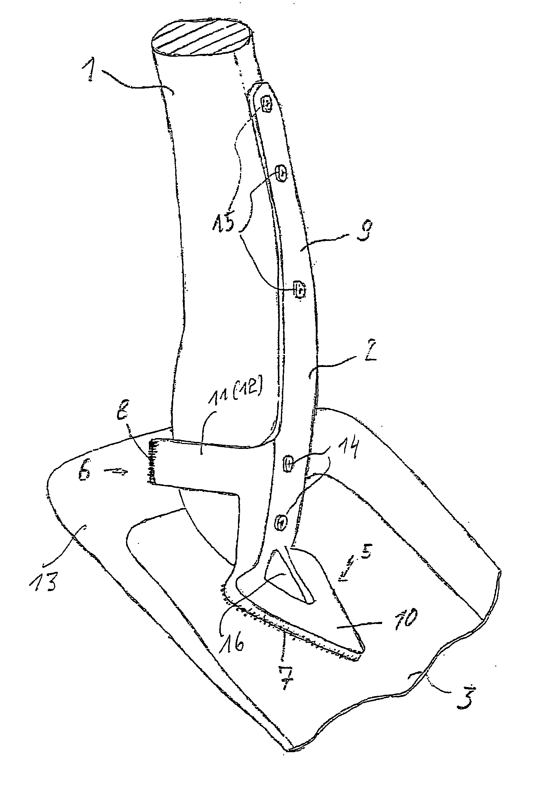

Weitere Einzelheiten und Vorteile der Erfindung werden nachfolgend durch ein Ausführungsbeispiel anhand der beigefügten Zeichnung näher erläutert und beschrieben; hierbei zeigt die einzige Figur einen Abschnitt einer Grabschaufel im Bereich der Befestigung des Schaufelstiels an dem Schaufelblatt mit Hilfe des erfindungsgemäßen Haltegliedes in perspektivischer Darstellung.

In der einzigen Figur bezeichnet 1 den unteren Abschnitt eines Schaufelstiels, der im wesentlichen einen langlochartigen Querschnitt aufweist, d. h., im wesentlichen zwei lange Seiten und zwei gerundete Schmalseiten aufweist und der zum unteren Ende des Schaufelstiels 1 hin verdickt ausgebildet ist. Der Schaufelstiel 1 ist über ein federartiges Halteglied 2 aus Metall an einem gleichfalls metallischem Schaufelblatt 3 befestigt, und zwar in zwei Bereichen 5 und 6 an dieses angeschweißt, angedeutet bei 7 und 8. Hierfür ist das Halteglied 2 löffelartig ausgebildet, nämlich mit einem schmalen Löffelschaft 9 und einem flachen Löffelteil 10, welches in der Draufsicht im dargestellten Beispiel dreieckförmig ist.

Das Halteglied 2 besitzt ferner im Bereich 6 den Endabschnitt des Schaufelstiels 1 umgreifende Laschen 11 (12), die mit ihren freien Enden an den rückwärtigen aufgewölbten bzw. vom Schaufelblatt hochgezogenen Rand - bezeichnet mit 13 - des Schaufelblattes 3 bei 8 geschweißt sind. Durch die Laschen 11 (12) ist der Schaufelstiel 1 aufgrund seines flachen Querschnitts definiert drehsicher gehalten.

Der flach ausgebildete Löffelteil 10 ist insbesondere mittig auf dem flachen Endabschnitt des Schaufelblattes 3 angeordnet und damit verschweißt, wodurch die Unterseite des Schaufelblattes 3 vorteilhaft glatt ausgebildet ist und somit die vorgeschlagene Grabeschaufel auch gegenüber einer vernieteten Ausführung nach dem Stand der Technik besser gleitet und kein Bruch durch ein mögliches Abschleifen der Nietverbindung auftreten kann.

Der schmale Löffelschaft 9 des Haltegliedes 2 ist im Bereich 6 der Laschen 11 (12) mit dem Endabschnitt des Schaufelstiels 1 lediglich durch zwei Holzschrauben 14 verschraubt und nicht in der konventionellen Weise damit vernietet, die aufgrund ihrer relativ kleinen Größe den Schaufelstiel vorteilhaft nicht merklich schwächen und somit nicht die Festigkeit der gesamten Grabeschaufel herabsetzen.

Des weiteren ist der schmale Löffelschaft 9 durch weitere, hier drei Holzschrauben 15 mit dem Schaufelstiel 1 verbunden, wobei der Löffelschaft 9 in diesem Bereich entsprechend dem Verlauf des Schaufelstiels 1 leicht gebogen, d. h., dessen Formgebung angepasst ist.

Schließlich ist es auch möglich, das Halteglied 2 im Bereich des Übergangs von seinem schmalen Löffelschaft 9 zum flachen Löffelteil 10 durch einen Winkelsteg 16 zu versteifen, der zweckmäßigerweise dort eingeformt oder eingeschweißt wird und dadurch eine weitere Stabilisierung zwischen Schaufelstiel 1 und dem Schaufelblatt 3 bewirkt.

Das Halteglied 2 ist zweckmäßigerweise als Stanzteil ausgebildet, welches durch eine Presse derart zu verformen ist, dass die Laschen 11 (12) einen den Schaufelstiel 1 der Grabschaufel später aufnehmenden U-förmigen Bügel bilden. Gleichzeitig wird der schmale Löffelschaft 9 des Haltegliedes 2 gegenüber dem flachen Löffelteil 3 entsprechend der eingebauten Stellung des Schaufelstiels 1 abgewinkelt ausgebildet.

Insgesamt wird mit der geometrischen Neugestaltung der vorliegenden Grabeschaufel, und hier insbesondere durch die besondere konstruktive Gestaltung des Haltegliedes 2, erreicht, dass sowohl die Spitze 10 des Haltegliedes 2 als auch die seitlichen Laschen 11 und 12 mit dem Schaufelblatt 3 in einer Schweißausführung miteinander verbunden sind, wodurch die Grabeschaufel gegenüber dem aufgezeigten Stand der Technik eine höhere Festigkeit und Steifigkeit besitzt. Der Querschnitt des Schaufelstiels 1 bleibt durch das Weglassen der durch diesen durchgreifenden Nieten im Wesentlichen erhalten und der Verschleiß der nach dem Stand der Technik vorgesehenen Nietköpfe auf der Unterseite,des Schaufelblattes 3 und damit ein mögliches Lösen der Spitze 10 des Halteglieds 2 ist vorteilhaft nicht mehr möglich und somit eine lange Gebrauchsdauer der vorgeschlagenen Grabeschaufel gewährleistet.

## Patentansprüche

1. Schaufel, insbesondere Grabeschaufel, mit einem Schaufelblatt und einem Schaufelstiel, der an dem Schaufelblatt über ein mit dem Schaufelblatt verbundenen Halteglied befestigt ist, **dadurch gekennzeichnet, dass** das Halteglied (2) in mindestens zwei voneinander getrennten Bereichen (5; 6) mit dem Schaufelblatt (3) verbunden ist und in einem dieser Bereiche (6) beidseitig den Schaufelstiel (1) der Grabeschaufel umgreifende Laschen (11; 12) aufweist, die mit dem Schaufelblatt (3) unlösbar verbunden sind.

2. Schaufel nach Anspruch 1, **dadurch gekennzeichnet, dass** die den Schaufelstiel (1) der Grabeschaufel umgreifenden Laschen (11; 12) mit ihren freien Enden an dem rückwärtigen aufgewölbten Rand (13) des Schaufelblattes (3) unlösbar verbunden sind.

3. Schaufel nach Anspruch 2, **dadurch gekennzeichnet, dass** die den Schaufelstiel (1) der Grabeschaufel umgreifenden Laschen (11; 12) mit ihren freien Enden am rückwärtigen aufgewölbten Rand (13) des Schaufelblattes (3) angeschweißt sind.

4. Schaufel nach einem der vorhergehenden Ansprüche, mit einem löffelartigen Halteglied, an dessen Löffelschaft der Schaufelstiel der Grabeschaufel befestigt ist, wobei der Schaufelstiel vorzugsweise einen langlochartigen Querschnitt aufweist und der flache Löffelteil des Haltegliedes insbesondere mittig mit dem flachen Endabschnitt des Schaufelblattes verbunden ist, **dadurch gekennzeichnet; dass** die Laschen (11; 12) des Halteglieds (2) derart angeordnet sind, dass sie den Schaufelstiel (1) der Grabeschaufel an dessen Flachseiten umgreifen.

5. Schaufel nach Anspruch 4, **dadurch gekennzeichnet, dass** der Löffelschaft (9) des Haltegliedes (2) im Bereich (6) der Laschen (11; 12) mit dem Schaufelstiel (1) der Grabeschaufel verschraubt ist.

6. Schaufel nach Anspruch 4 oder 5, **dadurch gekennzeichnet, dass** der als eine Art flacher Löffel (10) ausgebildete Abschnitt des Halteglieds (2) mit dem flachen Endabschnitt des Schaufelblattes (3) verschweißt ist.

7. Schaufel nach einem der vorhergehenden Ansprüche, **dadurch gekennzeichnet, dass** das Halteglied (2) als flaches Stanzteil ausgebildet ist.

8. Schaufel nach einem der vorhergehenden Ansprüche, **dadurch gekennzeichnet, dass** das flache Stanzteil durch Pressen derart verformt ist, dass die Laschen (11; 12) einen den Schaufelstiel (1) der Grabeschaufel aufnehmenden U-förmigen Bügel bilden.

9. Schaufel nach einem der vorhergehenden Ansprüche, **dadurch gekennzeichnet, dass** das freie Ende des Löffelschafts (9) des Haltegliedes (2) mit dem Schaufelstiel (1) der Grabeschaufel verschraubt ist.

10. Schaufel nach einem der vorherigen Ansprüche, **dadurch gekennzeichnet, dass** der Löffelschaft (9) des Halteglieds (2) gegenüber dem flachen Löffelteil (10) entsprechend der eingebauten Stellung des Schaufelstiels (1) abgewinkelt ausgebildet ist und vorzugsweise das Halteglied (2) im Bereich des Übergangs von seinem schmalen Löffelschaft (9) zum flachen Löffelteil (10) durch einen Winkelsteg (16) versteift ausgebildet ist.

## Revendications

1. Pelle, en particulier pelle-bêche, comprenant une lame de pelle et un manche de pelle qui est fixé à la lame de pelle par l'intermédiaire d'un élément de fixation relié à la lame de pelle, **caractérisée en ce que** l'élément de fixation (2) est relié à la lame de pelle (3) dans au moins deux zones séparées (5 ; 6) et **en ce qu'**elle présente, dans une de ces zones (6), des pattes (11 ; 12) entourant le manche (1) de la pelle-bêche, qui sont reliées de manière fixe à la lame de pelle (3).

2. Pelle selon la revendication 1, **caractérisée en ce que** les pattes (11 ; 12) entourant le manche (1) de la pelle-bêche sont reliées de manière fixe, au niveau de leurs extrémités libres, au bord arrière bombé (13) de la lame de pelle (3).

3. Pelle selon la revendication 2, **caractérisée en ce que** les pattes (11 ; 12) entourant le manche (1) de la pelle-bêche sont soudées, au niveau de leurs extrémités libres, au bord arrière bombé (13) de la lame de pelle (3).

4. Pelle selon l'une quelconque des revendications précédentes, comprenant un élément de fixation en forme de cuiller, au manche de cuiller duquel est fixé le manche de la pelle-bêche, dans laquelle le manche de pelle présente de préférence une section en forme de trou oblong et la partie plate de la cuiller de l'élément de fixation est reliée à la partie d'extrémité plate de la lame de pelle, en particulier au centre, **caractérisée en ce que** les pattes (11 ; 12) de l'élément de fixation (2) sont disposées de telle manière qu'elles entourent le manche (1) de la pelle-bêche au niveau de ses côtés plats.

5. Pelle selon la revendication 4, **caractérisée en ce que** le manche de cuiller (9) de l'élément de fixation (2) est vissé sur le manche (1) de la pelle-bêche dans la zone (6) des pattes (11 ; 12).

6. Pelle selon la revendication 4 ou 5, **caractérisée en ce que** la partie de l'élément de fixation (2) de forme analogue à une cuiller plate (10) est soudée à la partie d'extrémité plate de la lame de pelle (3).

7. Pelle selon l'une quelconque des revendications précédentes, **caractérisée en ce que** l'élément de fixation (2) est conçu sous forme de pièce emboutie plate.

8. Pelle selon l'une quelconque des revendications précédentes, **caractérisée en ce que** la pièce emboutie plate est déformée à la presse de telle manière que les pattes (11 ; 12) forment une bride en forme de U recevant le manche (1) de la pelle-bêche.

9. Pelle selon l'une quelconque des revendications précédentes, **caractérisée en ce que** l'extrémité libre du manche de cuiller (9) de l'élément de fixation (2) est vissée sur le manche (1) de la pelle-bêche.

10. Pelle selon l'une quelconque des revendications précédentes, **caractérisée en ce que** le manche de cuiller (9) de l'élément de fixation (2) est conçu sous forme coudée par rapport à la partie plate de cuiller (10) conformément à la position montée du manche de pelle (1) et, de préférence, **en ce que** l'élément de fixation (2) est conçu, dans la zone de transition entre son manche de cuiller (9) étroit et la partie plate de cuiller (10), renforcé par une entretoise angulaire (16).

## Claims

1. A shovel, particularly a digging shovel, having a shovel blade and a shovel handle which is mounted on the shovel blade by way of a holding element connected to the shovel blade, **characterised in that** the holding element (2) is connected to the shovel blade (3) in at least two mutually separate regions (5; 6) and, in one of these regions (6), has lugs (11; 12) which reach around the shovel handle (1) of the digging shovel on both sides and are non-detachably connected to the shovel blade (3).

2. A shovel according to Claim 1, **characterised in that** the lugs (11; 12) reaching around the shovel handle (1) of the digging shovel are non-detachably connected by their free ends to the rear curved-up edge (13) of the shovel blade (3).

3. A shovel according to Claim 2, **characterised in that** the lugs (11; 12) reaching around the shovel handle (1) of the digging shovel are welded by their free ends to the rear curved-up edge (13) of the shovel blade (3).

4. A shovel according to one of the preceding claims, having a spoon-like holding element, on the spoon shaft of which the shovel handle of the digging shovel is mounted, the shovel handle preferably having a cross-section in the form of an elongated hole, and the flat spoon part of the holding element being particularly centrally connected to the flat end portion of the shovel blade, **characterised in that** the lugs (11; 12) of the holding element (2) are arranged such that they reach around the shovel handle (1) of the digging shovel on its flat sides.

5. A shovel according to Claim 4, **characterised in that** the spoon shaft (9) of the holding element (2) is screwed to the shovel handle (1) of the digging shovel in the region (6) of the lugs (11; 12).

6. A shovel according to Claim 4 or 5, **characterised in that that** portion of the holding element (2) which is constructed as a type of flat spoon (10) is welded to the flat end portion of the shovel blade (3).

7. A shovel according to one of the preceding claims, **characterised in that** the holding element (2) is constructed as a flat punched part.

8. A shovel according to one of the: preceding claims, **characterised in that** the flat punched part is deformed by pressing in such a way that the lugs (11; 12) form a U-shaped clip receiving the shovel handle (1) of the digging shovel.

9. A shovel according to one of the preceding claims, **characterised in that** the free end of the spoon shaft (9) of the holding element (2) is screwed to the shovel handle (1) of the digging shovel.

10. A shovel according to one of the preceding claims, **characterised in that** the spoon shaft (9) of the holding element (2) is constructed such that it is bent at an angle to the flat spoon part (10) according to the position of the assembled shovel handle (1), and the holding element (2) is preferably constructed such that it is reinforced by an angled web (16) in the region of the transition from its narrow spoon shaft (9) to the flat spoon part (10).
